# FASCICULE DE BREVET EUROPEEN

(11) **EP 2 212 924 B1**
(45) Date de publication et mention de la délivrance du brevet: **20.07.2016**
(21) Numéro de dépôt: 08839901.9
(22) Date de dépôt: 13.10.2008
(51) Int. Cl.: H02S 40/34

(54) **Perfectionnements apportés à un boîtier de connexion pour éléments capables de collecter de la lumière**
Verbesserungen an einem Verbindungsgehäuse für Lichterfassungselemente
Improvements to a connection housing for light-capturing elements

(30) Priorité: 16.10.2007 FR 0758351
(43) Date de publication de la demande: 04.08.2010
(73) Titulaire: Saint-Gobain Glass France, 92400 Courbevoie (FR)
(72) Inventeur: KUSTER, Hans-Werner, 52066 Aachen (DE); REUL, Bernhard, 52134 Herzogenrath (DE); STETTER, Walter, 89257 Illertissen (DE)
(74) Mandataire: Gebauer, Dieter Edmund
(86) Numéro de dépôt international: PCT/EP2008/063745
(87) Numéro de publication internationale: WO 2009/050145

(56) Documents cités:
- EP-A- 1 601 024
- DE-A1- 19 813 324
- US-A- 5 503 684

## Description

La présente invention est relative à des perfectionnements apportés à un boîtier de connexion pour éléments capables de collecter de la lumière.

Il est connu que des éléments capables de collecter de la lumière du type cellules solaires photovoltaïques comportent un agent absorbant, et deux électrodes électriquement isolées l'une par rapport à l'autre. L'ensemble est encapsulé entre deux substrats dont l'un constitué un substrat de protection à fonction verrière afin de permettre le passage de la lumière et l'autre substrat forme un support et n'est donc pas nécessairement transparent. Ces électrodes se caractérisent essentiellement par une résistance électrique aussi faible que possible et une bonne adhérence à la couche d'absorbeur ainsi que le cas échéant au substrat. Les électrodes sont la plupart du temps fabriquées en métal ou à partir d'un oxyde métallique, par exemple à base de molybdène, d'argent, d'aluminium, de cuivre, d'oxyde de zinc dopé, ou d'oxyde d'étain.

Les composés ternaires chalcopyrites qui peuvent jouer le rôle d'absorbeur contiennent généralement du cuivre, de l'indium et du sélénium. Il s'agit là de ce que l'on appelle des couches d'agent absorbant CISe₂. On peut aussi ajouter à la couche d'agent absorbant du gallium (ex : Cu(In,Ga)Se₂ ou CuGaSe₂), de l'aluminium (ex : Cu(In,Al)Se₂), ou du soufre (ex : CuIn(Se,S). On les désigne en général et ci-après par le terme de couches d'agent absorbant à chalcopyrite.

Une autre famille d'agent absorbant, en couche mince, est soit à base de silicium, ce dernier pouvant être amorphe ou microcristallin, soit à base de tellure de cadmium (CdTe). Il existe également une autre famille d'agent absorbant à base de silicium cristallin ou de wafer de silicium, déposé en couche épaisse, avec une épaisseur comprise entre 50 µm à 250 µm, au contraire de la filière silicium amorphe ou microcristallin, qui est déposé en couche mince.

Pour ces agents absorbants de diverses technologies, on sait que leur rendement photovoltaïque (de conversion énergétique) est réduit de manière notable lors de la pénétration d'humidité, par diffusion de molécules d'eau sous forme liquide ou vapeur, même sans une détérioration visible de l'aspect optique.

C'est pourquoi l'assemblage des cellules solaires qui consiste à réunir entre 2 substrats, l'un formant un couvercle, l'autre formant un support, l'ensemble des couches et des connexions électriques permettant de relier ladite cellule à l'extérieur pour une utilisation de l'énergie produite, doit être réalisé avec le plus grand soin en veillant particulièrement à étanchéifier le module solaire. Particulièrement cette étanchéité du module est réalisée au niveau d'une part, du chant de la cellule par le dépôt par exemple par une technique d'extrusion d'un cordon de joint et au niveau d'autre part, des orifices de passage des connexions électriques.

Comme on l'a vu précédemment la couche d'agent absorbant à chalcopyrite est sensible à l'humidité et l'assemblage de la cellule solaire doit veiller à empêcher toute pénétration d'humidité. Les points sensibles de la cellule pouvant constituer des points d'entrée à l'humidité sont, d'une part le cordon de joint périphérique et les orifices nécessaires au passage des connexions électriques d'autre part. Les constructeurs de cellule solaire ont développé en collaboration avec des spécialistes de la chimie des compositions pour joint (ou pour un ensemble de joints, un joint étant destiné par exemple à exercer une barrière à l'eau liquide, et l'autre réalisant une barrière à l'eau vapeur) qui remplissent leur fonction en périphérie de la cellule, mais dans une moindre mesure au niveau des orifices nécessaires à la connexion électrique.

Au niveau de ces orifices, l'humidité peut remonter le long des fils en direction de l'empilement de couches, ce phénomène pouvant être accentué par une prise de jeu consécutive au fait que les connexions électriques sont généralement constituées de connecteurs souples.

Le document US 5 503 684 A décrit un élément selon lé préambule de revendication 1.

La présente invention vise donc à pallier les inconvénients des solutions antérieures en proposant un dispositif de connexion étanche au niveau des orifices d'entrée et de sortie des connexions électriques de la cellule solaire.

A cet effet, l'élément capable de collecter de la lumière comportant les caractéristiques de revendication 1. L'élément comportant un premier substrat formant couvercle de protection et un second substrat formant plaque support, lesdits substrats emprisonnant entre deux couches conductrices formant électrodes au moins une couche fonctionnelle à base d'un matériau absorbeur permettant une conversion énergétique de la lumière en énergie électrique caractérisé en ce que le second substrat est pourvu d'au moins un orifice débouchant au niveau de chacune des couches conductrices et au sein duquel chemine un organe presseur emprisonné au sein d'une cavité réalisée dans un dispositif de connexion électrique solidaire dudit substrat. Dans des modes de réalisation préférés de l'invention, on peut éventuellement avoir recours en outre à l'une et/ou à l'autre des dispositions suivantes :
- l'organe presseur est au contact d'une bande de matériau conducteur rapportée sur une portion de surface de la couche conductrice,
- la cavité englobant l'organe presseur est remplie d'un fluide préservant l'organe presseur d'une oxydation,
- le dispositif de connexion électrique comprend une pluralité des moyens de raccordement électriques en relation électrique d'une part, avec l'organe presseur et d'autre part avec un réseau d'utilisation et/ou avec une diode de by-pass,

Selon un autre aspect de l'invention, elle vise également le dispositif de connexion adapté pour être utilisé avec l'élément capable de collecter de la lumière précédemment décrit, qui comporte un boîtier sensiblement parallélépipédique, la face du dispositif destinée à être en contact de la face inférieure du substrat comportant un orifice recevant un organe presseur destiné à venir en contact électrique d'au moins une électrode déposée sur une portion de surface d'un substrat.

D'autres caractéristiques, détails, avantages de la présente invention apparaîtront mieux à la lecture de la description qui va suivre, faite à titre illustratif et nullement limitatif, en référence à des figures annexées sur lesquelles :
- les figures 1a et 1b sont des vues schématiques d'un élément capable de collecter de la lumière selon l'invention,
- la figure 2 est une vue en coupe d'un élément selon l'invention, cette coupe étant réalisée au niveau d'un dispositif de connexion électrique,
- la figure 3 est une vue en perspective d'un dispositif de connexion représenté en figure 2.
- La figure 4 est une vue en perspective d'un dispositif de connexion selon un autre mode de réalisation de l'invention,
- La figure 5 est une vue en perspective du dispositif représenté à la figure 4, la diode et l'organe presseur étant visibles,
- La figure 6 est une vue en perspective du dispositif représenté à la figure 4, seule la diode est visible

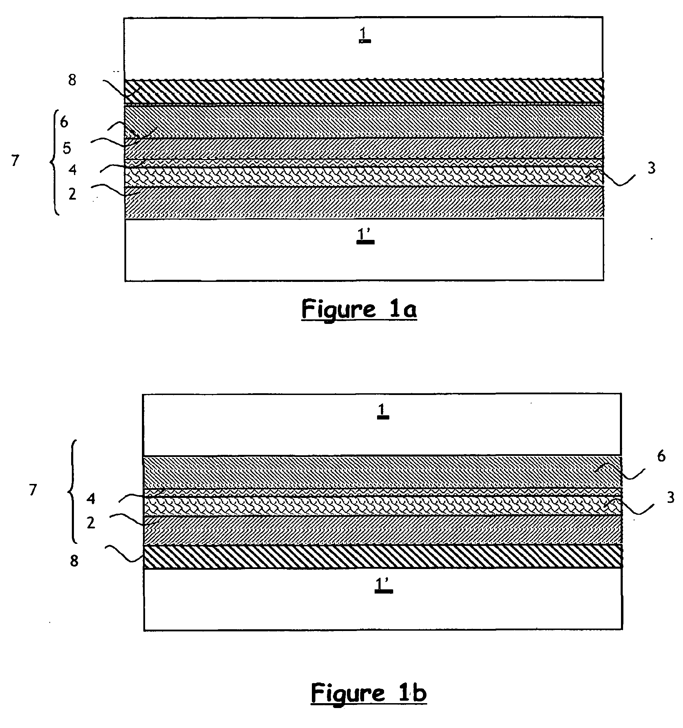

Sur la figure 1a, on a représenté un élément capable de collecter de la lumière (une cellule solaire ou photovoltaïque). Schématiquement, deux substrats 1 et 1', (le substrat 1 formant couvercle, le substrat 1' formant support) dont l'un au moins (le substrat 1 en l'occurrence) est nécessairement transparent pour laisser passer la lumière, emprisonnent un empilement de couches 7, comportant entre des couches électroconductrices 2, 6 formant électrodes, une couche fonctionnelle 3 à base d'agent absorbant permettant la conversion énergétique de la lumière en énergie électrique.

Le substrat 1 formant couvercle est transparent et peut par exemple être entièrement en verre. Il peut également être en un polymère thermoplastique tel qu'un polyuréthane ou un pôlycarbonate ou un polyméthacrylate de méthyle.

L'essentiel de la masse (c'est-à-dire pour au moins 98 % en masse), voire la totalité du substrat à fonction verrière est constituée de matériau(x) présentant la meilleure transparence possible et ayant de préférence une absorption linéique inférieure à 0,01 mm⁻¹ dans la partie du spectre utile à l'application (module solaire), généralement le spectre allant de 380 à 1200 nm.

Le substrat 1 formant couvercle selon l'invention peut avoir une épaisseur totale allant de 0,5 à 10 mm lorsqu'on l'utilise comme plaque protectrice d'une cellule photovoltaïque de diverses technologies (CIGS, silicium amorphe, silicium micro cristallin). Dans ce cas, il peut être avantageux de faire subir à cette plaque un traitement thermique (du type trempe par exemple) lorsqu'il est en verre.

Le substrat 1' formant plaque support diffère du substrat 1 par le fait qu'il n'est pas nécessairement transparent, et donc pas nécessairement à fonction verrière.

Sur l'une des faces principales de ce substrat 1', on dépose une première couche conductrice 2 devant servir d'électrode. Sur cette électrode 2 est déposée la couche fonctionnelle 3 à base d'agent absorbant à chalcopyrite. Lorsqu'il s'agit d'une couche fonctionnelle à base par exemple de CIS, CIGS, ou CIGSe₂ il est préférable que l'interface entre la couche fonctionnelle 3 et l'électrode 2 soit à base de molybdène. Une couche conductrice répondant à ces exigences est décrite dans la demande de brevet européen EP1356528.

La couche d'agent absorbant à chalcopyrite 3 est revêtue d'une fine couche 4, dite tampon, en sulfure de cadmium (CdS), ou en sulfure de zinc (ZnS), ou en sulfure d'indium (IS) permettant de créer avec la couche à chalcopyrite une jonction pn. En effet, l'agent absorbant à chalcopyrite est généralement dopé p, la couche tampon étant dopée n, cela permet de créer la jonction pn nécessaire à l'établissement d'un courant électrique.

Cette fine couche 4 tampon par exemple en CdS est elle-même recouverte d'une couche d'accrochage 5 généralement formée d'oxyde de zinc non dopée (ZnO).

Afin de former la seconde électrode 6, la couche de ZnO 5 est recouverte d'une couche en TCO pour « Transparent Conductive Oxide ».

Afin de former la seconde électrode 6, la couche de ZnO 5 est recouverte d'une couche en TCO pour « Transparent Conductive Oxide ». Elle peut être choisie parmi les matériaux suivants : oxyde d'étain dopé, notamment en bore, ou en aluminium. Dans le cas de l'oxyde de zinc dopé, notamment à l'aluminium, les précurseurs utilisables, en cas de dépôt par CVD, peuvent être des organo-métalliques ou halogénures de zinc et d'aluminium. L'électrode en TCO, par exemple en ZnO peut être aussi déposée par pulvérisation à partir de cible métallique ou céramique.

Par ailleurs, cette couche conductrice doit être aussi transparente que possible, et présenter une transmission élevée de la lumière dans l'ensemble des longueurs d'onde correspondant au spectre d'absorption du matériau constituant la couche fonctionnelle, afin de ne pas réduire inutilement le rendement du module solaire.

L'une ou l'autre des couches conductrices 2, 6 présente une résistance par carré d'au plus 30 ohms/carré, notamment d'au plus 20 ohms/carré, de préférence d'au plus 10 ou 15 ohms/carré. Elle est généralement comprise entre 5 et 12 ohms/carré.

L'empilement 7 de couches minces est emprisonné entre les deux substrats 1 (couvercle) et 1' (support) par l'intermédiaire d'un intercalaire de feuilletage 8 par exemple en PU, PVB ou EVA. Le substrat 1 se distingue du substrat 1' par le fait qu'il est à fonction verrière, comme un verre silico-sodo-calcique de manière à conformer le couvercle d'une cellule solaire ou photovoltaïque ou un module puis encapsulé périphériquement à l'aide d'un joint ou d'une résine d'étanchéité. Un exemple de composition de cette résine et de ses modalités de mise en oeuvre est décrit dans la demande EP739042.

Si on utilise un absorbant de la filière silicium en couche mince, à savoir du silicium amorphe, ou du silicium micro cristallin, ou un agent absorbant e à base de tellure de cadmium (CdTe) en couche mince, la construction de l'élément capable de collecter de la lumière est réalisée en sens inverse de celui utilisé pour la filière à chalcopyrite. On parle alors de construction dite à « superstrate » par opposition à la construction dite à « strate ». On pourra se reporter à la figure 1b.

La différence essentielle réside dans le fait que l'empilement de couches minces est construit à partir du substrat 1 (le couvercle). La face B (la face principale interne) du substrat 1 est revêtue d'une première couche conductrice 6 devant servir d'électrode. Sur cette électrode est déposée la couche fonctionnelle à base d'agent absorbant en silicium amorphe ou microcristallin ou en tellure de cadmium.

Afin de former l'électrode 6 du dessus, la couche est à base d'une couche en TCO pour « Transparent Conductive Oxide ».

Elle peut être choisie parmi les matériaux suivants : oxyde d'étain dopé, notamment en bore, ou en aluminium. Dans le cas de l'oxyde de zinc dopé, notamment à l'aluminium, les précurseurs utilisables, en cas de dépôt par CVD, peuvent être des organo-métalliques ou halogénures de zinc et d'aluminium. L'électrode en TCO, par exemple en ZnO peut être aussi déposée par pulvérisation à partir de cible métallique ou céramique.

Par ailleurs, cette couche conductrice doit être aussi transparente que possible, et présenter une transmission élevée de la lumière dans l'ensemble des longueurs d'onde correspondant au spectre d'absorption du matériau constituant la couche fonctionnelle, afin de ne pas réduire inutilement le rendement du module solaire.

Cette couche 6 de TCO, à base par exemple de SnO2 : F ou de ZnO :Al est recouverte éventuellement d'une couche 5 additionnelle relativement mince (par exemple 100 nm) en ZnO diélectrique, non dopé (ZnO). Cette couche mince de ZnO est ensuite recouverte de la couche fonctionnelle 3 à base de silicium ou de tellure de cadmium en couche mince. Le reste de l'empilement 7 est constitué d'une deuxième couche conductrice 2 servant d'électrode en matériau métallique ou d'oxyde métallique. Classiquement cette couche conductrice est à base d'ITO (oxyde d'indium et d'étain) ou en métal (cuivre, aluminium)

L'une ou l'autre des couches conductrices 2, 6 présente résistance par carré d'au plus 30 ohms/carré, notamment d'au plus 20 ohms/carré, de préférence d'au plus 10 ou 15 ohms/carré. Elle est généralement comprise entre 5 et 12 ohms/carré.

L'empilement de couches minces est emprisonné entre les substrats 1 (couvercle) et 1' (support) par l'intermédiaire d'un intercalaire de feuilletage 8 par exemple en PU, PVB ou EVA. Le substrat 1' formant support se distingue du substrat 1 par le fait qu'il n'est pas nécessairement en verre et n'est pas forcément transparent. Il joue un rôle de support et est encapsulé avec l'autre substrat 1 périphériquement à l'aide d'un joint ou d'une résine d'étanchéité. Un exemple de composition de cette résine et de ses modalités de mise en oeuvre est décrit dans la demande EP739042.

Un module solaire tel que précédemment décrit, doit, pour pouvoir fonctionner et délivrer une tension électrique à un réseau de distribution électrique, être pourvu de dispositifs de connexions électriques.

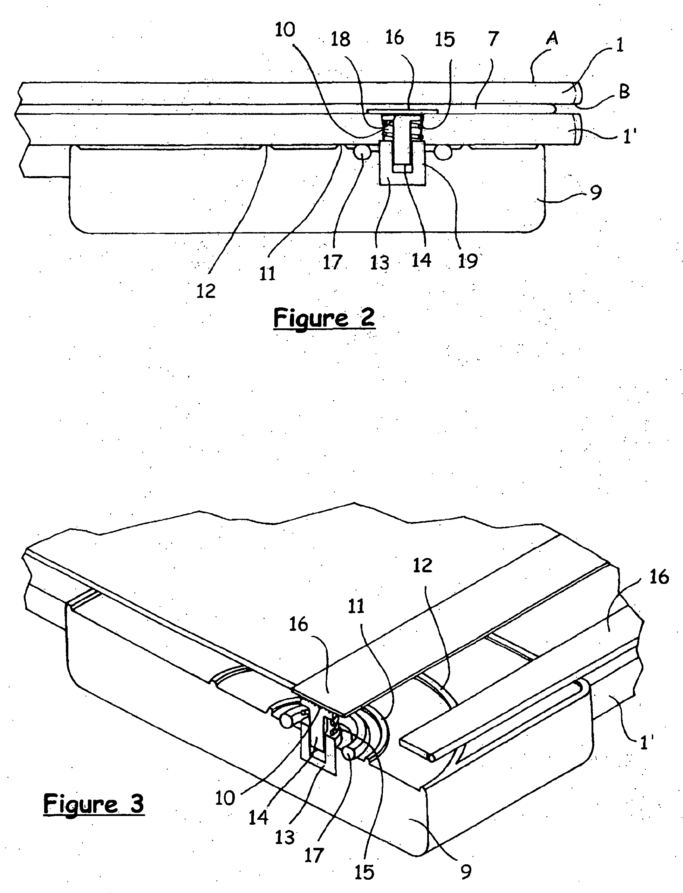

Sur les figures 2 et 3, on a représenté en détail un dispositif de connexion électrique 9. Ce dispositif de connexion 9 est positionné au dos du module solaire, solidarisé par collage ou par tout moyen similaire (soudage, adhésif le à la face inférieure du module. Préférentiellement au nombre de 2 par module (un par électrode), il assure la connexion électrique du module à une interface utilisateur (généralement constituée par un dispositif électronique permettant de convertir une tension continue en une tension alternative compatible avec le réseau de distribution).

Ce dispositif de connexion électrique 9 se présente sous la forme d'un boîtier ou boite, et est obtenu par exemple par un procédé d'injection de matière plastique. La face du boîtier destinée à être en contact de la face inférieure du substrat 1' comporte un orifice borgne et une pluralité de zones 11, 12 en creux ou en relief concentriques autour de cet orifice.

L'orifice reçoit un organe presseur 19 comportant d'une part une partie fixe 13 logée dans l'orifice et une partie mobile 14 en translation par rapport à la partie fixe 13 et formant piston, l'ensemble formant une liaison élastique grâce à l'interposition d'un ressort 15 à spirale ou similaire. Aussi bien la partie fixe 13 que la partie mobile 14 sont réalisées dans un matériau conducteur de l'électricité, comme par exemple en cuivre.

La tête du piston est pourvue d'une pluralité de reliefs ou de rugosités afin d'améliorer le contact au niveau d'une zone située entre cette tête et les couches conductrices 2, 6 formant électrodes.

Afin d'optimiser le contact électrique entre la tête du piston 13 et la couche conductrice 2 ou 6, on dépose au niveau de la zone de contact une bande 16 constituée d'un matériau conducteur (par exemple en aluminium, en cuivre...), cette bande 16 étant par exemple soudée par ultrasons au niveau d'une portion de surface de la couche conductrice 2 ou 6.

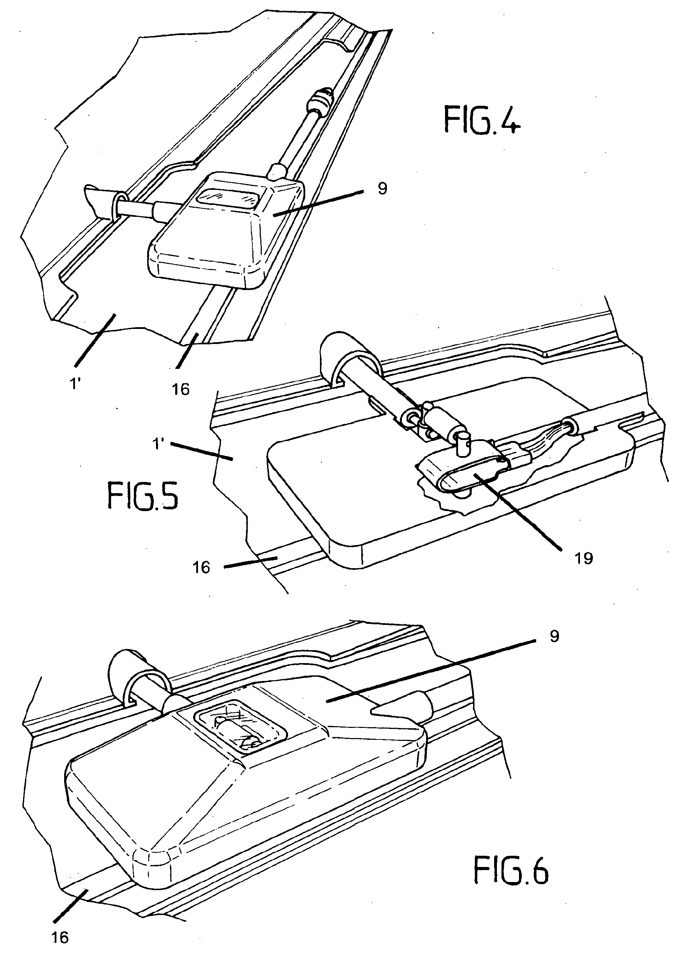

Une variante de réalisation de l'organe presseur 19 est représentée en figure 5. Comme on peut le voir sur cette figure, l'organe presseur est réalisé sous la forme d'un ressort à lame enroulé en spirale pour conférer à l'ensemble de l'élasticité.

Sur cette figure 5, le boîtier 9 dans lequel est inséré cet organe presseur 19, obtenu par une technique d'injection ou de moulage de plastique, est en fait à 2 niveaux formant chacun un compartiment, un niveau inférieur proche de la surface du module photo voltaïque, un niveau supérieur situé à l'opposé du précédent, ces niveaux étant séparés par une paroi étanche, de manière à pouvoir intervenir sur la diode, représentée sous la forme d'un cylindre, visible en figures 4 et 5, sans craindre de briser l'étanchéité avec le niveau inférieur (zone au sein de laquelle est emprisonné l'organe presseur en contact électrique avec la bande 16).

En figure 6, on a représenté le boîtier sans le couvercle de protection recouvrant la diode, ce couvercle est monté par « clipsage » ou emboîtage sur le corps de boîtier, et pouvant être facilement ôté en cas e besoin à l'aide par exemple d'une lame de tournevis

En figure 4, le boîtier recouvre complètement l'ensemble des éléments insérés à l'intérieur du boîtier, les protégeant ainsi mécaniquement que ainsi que toutes agressions environnementales.

En figure 5, la liaison électrique entre l'organe presseur et le fil électrique devant être relié au réseau d'exploitation est réalisée par sertissage, mais on peut sans sortir du cadre de l'invention, prévoir de souder ce fil électrique directement à cet organe presseur élastique ou indirectement par l'intermédiaire d'une partie conductrice, elle-même en contact électrique avec l'organe presseur élastique.

Autour de cet organe presseur 19 sont formées une pluralité de barrières d'étanchéité. Ainsi, on prévoit de disposer un joint 17 torique en élastomère qui sera comprimé contre le dos du module lorsque le dispositif de connexion sera solidarisé. L'espace annulaire 18 défini entre la périphérie de l'organe presseur 14 et la petite circonférence du joint 17 torique peut être avantageusement rempli lors de l'assemblage entre le dispositif de connexion et le dos du module, d'un fluide inerte (azote gazeux par exemple) afin d'éviter les phénomènes d'oxydation qui pourraient être néfastes à la qualité de la liaison électrique. En variante, on prévoit d'inclure dans le boîtier, une cavité destinée à recevoir un agent dessicant, cette cavité étant reliée à l'espace annulaire 18.

Afin encore de limiter, voire de supprimer les problèmes liés à des phénomènes d'oxydation consécutifs à des infiltrations d'eau tant liquide que vapeur, on interpose entre le grand diamètre du joint torique et le périmètre du module plusieurs cordons de joint (en fait les zones 11, 12) venus lors de la fabrication du dispositif de connexion, et formant chicane.

L'exemple de réalisation de l'organe presseur comprenant globalement un piston coulissant élastiquement au sein d'un logement peut être réalisé par d'autres formes de réalisation permettant de réaliser les mêmes fonctions en vue d'obtenir un résultat identique. Ainsi par exemple un assemblage de rondelles élastiques dans un logement, ou un clinquant pourvu d'ergots pour une coopération au sein de baïonnettes formées latéralement dans un logement cylindrique peuvent constituer par exemple des alternatives à cet organe presseur sans sortir du cadre de l'invention.

Lors du moulage, on inclut au sein du dispositif de connexion des moyens de raccordement électriques sous forme d'un premier connecteur (un fil électrique par exemple) en relation électrique avec l'organe presseur ainsi.

On inclut également un second connecteur qui est destiné être relié à une diode de by-pass. En effet, les modules solaires photovoltaïques peuvent être connectés en série avec d'autres modules de manière à former des bandes. Si l'un des modules se trouve obscurci par le passage d'un nuage par exemple, il se produit simultanément une réduction de courant produit dans la bande et l'apparition d'un courant de sens contraire dans le module masqué. Le dernier effet conduit à dissiper une quantité trop importante de puissance électrique, ce qui pourrait aboutir à sa destruction.. On équipe donc en standard les modules solaires de diodes by-pass ou délestage qui ont pour rôle de protéger la cellule solaire masquée et en même temps d'augmenter la puissante produite par la bande.

## Revendications

1. Elément capable de collecter de la lumière comportant un premier substrat (1) à fonction verrière formant couvercle de protection et un second substrat (1') formant plaque support, lesdits substrats emprisonnant entre deux couches conductrices (2, 6) formant électrodes au moins une couche fonctionnelle (3) à base d'un matériau absorbeur permettant une conversion énergétique de la lumière en énergie électrique, le second substrat (1') étant pourvu d'au moins un orifice débouchant au niveau d'une couche conductrice (2, 6) où l'élément capable de collecter de la lumière comporte en outre au moins un dispositif de connexion électrique (9) comprenant un boîtier solidaire du second substrat (1') et un organe presseur (19) qui passe dans ledit orifice du second substrat (1') et qui est en contact électrique avec une couche conductrice (2, 6), l'organe presseur (19) étant emprisonné au sein d'une cavité étanche (18) realisée dans le dispositif de connexion électrique (9) solidaire du second substrat (1'), l'élément capable de collecter de la lumière comportant des barrières d'étanchéité (17, 11, 12) autour de l'organe presseur (19), entre le boîtier et le second substrat (1'), **caractérisé en ce que** lesdites barrières d'étanchéité (17, 11, 12) comprennent une pluralité de zones (11, 12) en creux ou en relief prévues sur une face du boîtier en contact avec le second substrat (1') et concentriques autour de l'organe presseur (19).

2. Elément capable de collecter de la lumière selon la revendication 1, **caractérisé en ce que** l'organe presseur (19) est au contact d'une bande (16) de matériau conducteur rapportée sur une portion de surface de la couche conductrice (2, 6).

3. Elément capable de collecter de la lumière selon l'une quelconque des revendications précédentes, **caractérisé en ce que** la cavité (18) est remplie d'un fluide préservant l'organe presseur (19) d'une oxydation.

4. Elément capable de collecter de la lumière selon l'une quelconque des revendications précédentes, **caractérisé en ce que** le boîtier du dispositif de connexion électrique (9) dans lequel est inséré l'organe presseur (19) est à deux niveaux formant chacun un compartiment, un niveau inférieur proche de la surface du second substrat (1'), un niveau supérieur situé à l'opposé du précédent, ces niveaux étant séparés par une paroi étanche, de manière à pouvoir intervenir sur une diode, sans craindre de briser l'étanchéité avec le niveau inférieur.

5. Elément capable de collecter de la lumière selon l'une quelconque des revendications précédentes, **caractérisé en ce que** le dispositif de connexion électrique (9) comprend des moyens de raccordement électriques en relation électrique d'une part, avec l'organe presseur (19) et, d'autre part. avec un réseau d'utilisation et/ou avec une diode de by-pass.

6. Elément capable de collecter de la lumière selon l'une quelconque des revendications précédentes, **caractérisé en ce que** le dispositif de connexion électrique (9) comprend un réservoir adapté pour recevoir un agent dessicant, ce réservoir étant reliée à la cavité (18).

7. Elément capable de collecter de la lumière selon l'une quelconque des revendications précédentes, **caractérisé en ce qu'**il comporte deux dispositifs de connexion électrique (9), un pour chaque couche conductrice (2, 6).

8. Elément capable de collecter de la lumière selon l'une quelconque des revendications précédentes, **caractérisé en ce que** le boîtier du dispositif de connexion électrique (9) est en matière plastique.

9. Dispositif de connexion électrique (9) adapté pour un élément capable de collecter de la lumière, où l'élément capable de collecter de la lumière comporte un premier substrat (1) à fonction verrière formant couvercle de protection et un second substrat (1') formant plaque support, lesdits substrats emprisonnant entre deux couches conductrices (2, 6) formant électrodes au moins une couche fonctionnelle (3) à base d'un matériau absorbeur permettant une conversion énergétique de la lumière en énergie électrique caractérisé en qu'il comprend un boîtier, dont une face est destinée à être en contact avec le second substrat (1') de l'élément capable de collecter de la lumière, et un organe presseur (19), destiné a venir en contact électrique avec une couche conductrice de l'élément capable de collecter de la lumière, la face du boîtier destinée a être en contact avec le second substrat (1') comportant un orifice borgne débouchant au niveau d'une couche conductrice (2, 6), qui reçoit l'organe presseur (19), et une pluralité de zones (11, 12) en creux ou en relief, qui sont concentriques autour de cet orifice et qui conforment des barrières d'étanchéité.

10. Dispositif de connexion électrique (9) selon la revendication 9, **caractérisé en ce que** le boîtier est en matière plastique.

11. Dispositif de connexion électrique (9) selon l'une quelconque des revendications 9 ou 10, **caractérisé en ce que** les zones (11, 12) en creux ou en relief sont venues lors de la fabrication du boîtier.

12. Dispositif de connexion électrique (9) selon l'une quelconque des revendications 9 à 11, **caractérisé en ce que** le boîtier est à deux niveaux formant chacun un compartiment, un niveau inférieur destiné à être proche de la surface du substrat (1'), un niveau supérieur situé à l'opposé du précédent, ces niveaux étant séparés par une paroi étanche, de manière à pouvoir intervenir sur une diode, sans craindre de briser l'étanchéité avec le niveau inférieur.

13. Dispositif de connexion électrique (9) selon l'une quelconque des revendications 9 à 12, **caractérisé en ce qu'**il comprend des moyens de raccordement électriques en relation électrique, d'une part, avec l'organe presseur (19) et, d'autre part, avec un réseau d'utilisation et/ou avec une diode by-pass.

## Patentansprüche

1. Element zum Sammeln von Licht, mit einem transparenten ersten Substrat (1), das eine Schutzabdeckung formt, und einem zweiten Substrat (1'), das einen plattenförmigen Träger formt, wobei die beiden Substrate zwischen zwei leitfähigen Schichten (2, 6), die Elektroden bilden, mindestens eine funktionelle Schicht (3) auf Basis eines Absorbermaterials, das eine energetische Umwandlung des Lichts in elektrische Energie ermöglicht, einschließen, wobei das zweite Substrat (1') mit wenigstens einer Öffnung versehen ist, die auf Höhe einer leitfähigen Schicht (2, 6) mündet, wobei das Element zum Sammeln von Licht weiterhin wenigstens eine elektrische Anschlussvorrichtung (9) umfasst, die ein mit dem zweiten Substrat (1') verbundenes Gehäuse und ein Druckorgan (19), das sich in die Öffnung des zweiten Substrats (1') erstreckt und in elektrischem Kontakt mit einer leitfähigen Schicht (2, 6) ist, aufweist, wobei das Druckorgan (19) innerhalb einer dichten Ausnehmung (18), die in der mit dem zweiten Substrat (1') verbundenen elektrischen Anschlussvorrichtung (9) ausgebildet ist, enthalten ist, wobei das Element zum Sammeln von Licht Dichtbarrieren (17, 11, 12) um das Druckorgan (19) herum zwischen dem Gehäuse und dem zweiten Substrat (1') aufweist, **dadurch gekennzeichnet, dass** die Dichtbarrieren (17, 11, 12) eine Mehrzahl von getieften oder vorstehenden Zonen (11, 12) umfassen, die auf einer Seite des Gehäuses in Kontakt mit dem zweiten Substrat (1') vorgesehen und konzentrisch um das Druckorgan (19) ausgebildet sind.

2. Element zum Sammeln von Licht nach Anspruch 1, **dadurch gekennzeichnet, dass** das Druckorgan (19) in Kontakt mit einem Band (16) aus leitfähigem Material ist, das auf einen Abschnitt der Oberfläche der leitfähigen Schicht (2, 6) aufgebracht ist.

3. Element zum Sammeln von Licht nach einem der vorherigen Ansprüche, **dadurch gekennzeichnet, dass** die Ausnehmung (18) mit einer Flüssigkeit gefüllt ist, die das Druckorgan (19) vor Oxidation schützt.

4. Element zum Sammeln von Licht nach einem der vorherigen Ansprüche, **dadurch gekennzeichnet, dass** das Gehäuse der Anschlussvorrichtung (9), in das das Druckorgan (19) eingefügt ist, zwei jeweils ein Kompartiment bildende Niveaus aufweist, ein unteres Niveau nahe der Oberfläche des zweiten Substrats (1'), ein oberes Niveau gegenüber dem vorherigen, wobei diese Niveaus durch eine dichte Wand so getrennt sind, dass auf eine Diode zugegriffen werden kann, ohne dass die Gefahr besteht, dass die Dichtheit zum unteren Niveau beeinträchtigt wird.

5. Element zum Sammeln von Licht nach einem der vorherigen Ansprüche, **dadurch gekennzeichnet, dass** die elektrische Anschlussvorrichtung (9) elektrische Verbindungsmittel umfasst, die einerseits mit dem Druckorgan (19) und andererseits mit einem Gebrauchsnetz und/oder mit einer Bypass-Diode elektrisch verbunden sind.

6. Element zum Sammeln von Licht nach einem der vorherigen Ansprüche, **dadurch gekennzeichnet, dass** die elektrische Anschlussvorrichtung (9) ein Reservoir zum Aufnehmen eines Trocknungsmittels umfasst, wobei dieses Reservoir mit der Ausnehmung (18) verbunden ist.

7. Element zum Sammeln von Licht nach einem der vorherigen Ansprüche, **dadurch gekennzeichnet, dass** es zwei elektrische Anschlussvorrichtungen (9) umfasst, eine für jede leitfähige Schicht (2, 6).

8. Element zum Sammeln von Licht nach einem der vorherigen Ansprüche, **dadurch gekennzeichnet, dass** das Gehäuse der elektrischen Anschlussvorrichtung (9) aus einem Plastikmaterial besteht.

9. Elektrische Anschlussvorrichtung (9) für ein Element zum Sammeln von Licht, wobei das Element zum Sammeln von Licht ein transparentes erstes Substrat (1), das eine Schutzabdeckung formt, und ein zweites Substrat (1'), das einen plattenförmigen Träger formt, umfasst, wobei die beiden Substrate zwischen zwei leitfähigen Schichten (2, 6), die Elektroden bilden, wenigstens eine funktionelle Schicht (3) auf Basis eines Absorbermaterials, das eine energetische Umwandlung des Lichts in elektrische Energie ermöglicht, einschließen, **dadurch gekennzeichnet, dass** sie ein Gehäuse, von dem eine Seite in Kontakt mit dem zweiten Substrat (1') des Elements zum Sammeln von Licht kommen soll, und ein Druckorgan (19), das in elektrischen Kontakt mit einer leitfähigen Schicht des Elements zum Sammeln von Licht kommen soll, wobei die Seite des Gehäuses, die in mit Kontakt mit dem zweiten Substrat (1') kommen soll eine blinde Öffnung aufweist, die im Bereich der leitfähigen Schicht (2, 6) mündet, welche das Druckorgan (19) aufnimmt, und eine Mehrzahl von getieften oder vorstehenden Zonen (11, 12), die konzentrisch um diese Öffnung angeordnet sind und Dichtbarrieren entsprechen, umfasst.

10. Elektrische Anschlussvorrichtung (9) nach Anspruch 9, **dadurch gekennzeichnet, dass** das Gehäuse aus einem Plastikmaterial besteht.

11. Elektrische Anschlussvorrichtung (9) nach einem der vorherigen Ansprüche 9 oder 10, **dadurch gekennzeichnet, dass** die getieften oder vorstehenden Zonen (11, 12) bei der Herstellung des Gehäuses gebildet werden.

12. Elektrische Anschlussvorrichtung (9) nach einem der vorherigen Ansprüche 9 bis 11, **dadurch gekennzeichnet, dass** das Gehäuse (9) zwei Niveaus aufweist, die jeweils ein Kompartment bilden, ein unteres Niveau nahe der Oberfläche des zweiten Substrats (1'), ein oberes Niveau gegenüber dem vorherigen, wobei diese Niveaus durch eine dichte Wand so getrennt sind, dass auf eine Diode zugegriffen werden kann, ohne dass die Gefahr besteht, dass die Dichtheit zum unteren Niveau beeinträchtigt wird.

13. Elektrische Anschlussvorrichtung (9) nach einem der vorherigen Ansprüche 9 bis 12, **dadurch gekennzeichnet, dass** sie elektrische Verbindungsmittel umfasst, die einerseits mit dem Druckorgan (19) und andererseits mit einem Gebrauchsnetz und/oder einer Bypass-Diode elektrisch verbunden sind.

## Claims

1. Element capable of collecting light comprising a transparent first substrate (1) forming a protective cover and a second substrate (1') forming a plate support, said substrates imprisoning between two conductive layers (2, 6) forming electrodes at least one functional layer (3) based on absorbent material allowing energy conversion of light into electrical energy, the second substrate (1') being provided with at least one orifice emerging at the level of a conductive layer (2, 6) wherein the element capable of collecting light also includes at least one electrical connection device (9) including a housing that is solidary with the second substrate (1') and a presser body (19) which passes into said orifice of the second substrate (1') and which is in electrical contact with a conductive layer (2, 6), and the presser body (19) being imprisoned within a sealed cavity (18) realized in the electrical connection device (9) solidary with the second substrate (1'), the element capable of collecting light including barrier seals (17, 11, 12) around the presser body (19), between the housing .and the second substrate (1'), **characterized in that** said barrier seals (17, 11, 12) include a plurality of recessed or raised zones (11, 12) provided on one side of the housing in contact with the second substrate (1') and concentric around the presser body (19).

2. Element capable of collecting light according to claim 1, **characterised in that** the presser body (19) is in contact with a band (16) of conductive material applied to a surface portion of the conductive layer (2, 6).

3. Element capable of collecting light according to any one of the preceding claims, **characterised in that** the cavity (18) is filled with a fluid preserving the presser body (19) from oxidation.

4. Element capable of collecting light according to any one of the preceding claims, **characterised in that** the housing of the electrical connection device (9) in which the presser body (19) is inserted has two levels each forming a compartment, a lower level close to the surface of the second substrate (1'), an upper level opposite the previous one, these levels being separated by an impervious partition in a manner to intervene on a diode, without fear of breaking the seal with the lower level.

5. Element capable of collecting light according to any one of the preceding claims, **characterised in that** the electrical connection device (9) comprises electrical connection means in electrical relation, on the one hand, with the presser body (19) and, on the other hand, with a network of use and/or with a by-pass diode.

6. Element capable of collecting light according to any one of the preceding claims, **characterised in that** the electrical connecting device (9) comprises a reservoir suitable for receiving a desiccant, this reservoir being connected to the cavity (18).

7. Element capable of collecting light according to any one of the preceding claims, **characterised in that** it has two electrical connection devices (9), one for each conductive layer (2, 6).

8. Element capable of collecting light according to any one of the preceding claims, **characterised in that** the housing of the electrical connection device (9) is made of plastic material.

9. Electrical connection device (9) suitable for an element capable of collecting light wherein the element capable of collecting light includes a transparent first substrate (1) forming a protective cover and a second substrate (1') forming a support plate, said substrates imprisoning between two conductive layers (2, 6) forming electrodes at least one functional layer (3) based on absorbent material allowing a conversion of light energy into electrical energy **characterized in that** it includes a housing one side of which is intended to be in contact with the second substrate (1') of the light collecting element and a presser body (19), intended to come into electrical contact with a conductive layer of the light collecting element, the side of the housing intended to come into contact with the second substrate (1') comprising a blind orifice emerging at the level of a conductive layer (2, 6), which receives the presser body (19), and a plurality of recessed or raised zones (11, 12), which are concentric around this hole and which correspond to sealing barriers.

10. Electrical connection device (9) according to claim 9, **characterised in that** the housing is made of plastic.

11. Electrical connection device (9) according to any one of the claims 9 or 10, **characterized in that** the recessed or raised areas (11, 12) are formed during the manufacture of the housing.

12. Electrical connection device (9) according to any one of the claims 9 to 11, **characterised in that** the housing comprises two levels, each forming a compartment, a lower level intended to be close to the surface of the substrate (1'), an upper level opposite the previous one, these levels being separated by a sealed partition in a manner to intervene on a diode without fear of breaking the seal with the lower level.

13. Electrical connection device (9) according to any one of the claims 9 to 12, **characterised in that** it comprises electrical connecting means in electrical connection, on the one hand, with the presser body (19) and, on the other hand, with a network of use and/or with a by-pass diode.
